# EUROPÄISCHE PATENTSCHRIFT

(11) **EP 0 757 967 B1**
(45) Veröffentlichungstag und Bekanntmachung des Hinweises auf die Patenterteilung: **26.01.2000**
(21) Anmeldenummer: 96250164.9
(22) Anmeldetag: 31.07.1996
(51) Int. Cl.: B66C 1/12, G01L 5/04

(54) **Lastkontrolleinrichtung**
Load control device
Dispositif de contrôle de la charge

(30) Priorität: 08.08.1995 DE 19530687
(43) Veröffentlichungstag der Anmeldung: 12.02.1997
(73) Patentinhaber: RUD-KETTENFABRIK RIEGER & DIETZ GMBH U. CO., 73432 Aalen-Unterkochen (DE)
(72) Erfinder: Wolter, Frank-Dietrich, 73433 Aalen (DE)
(74) Vertreter: Böning, Manfred, Prof.Dr.-Ing.

(56) Entgegenhaltungen:
- CH-A- 341 662
- DE-A- 2 055 253
- DE-A- 3 421 844
- DE-A- 3 739 100
- FR-A- 2 229 962
- GB-A- 532 772

## Beschreibung

Die Erfindung betrifft eine mechanische Lastkontrolleinrichtung für insbesondere als Ketten ausgebildete Zugstränge mit einem Grundkörper, der einen bis zum Erreichen einer Grenzlast elastisch und nach Überschreiten der Grenzlast plastisch verformbaren Deformationsteil und zwei Anschlußstellen aufweist, deren Abstand voneinander sich unter Lasteinwirkung ändert, sowie mit einem Anzeigeorgan, das im Falle einer Verformung des Deformationsteiles des Grundkörpers unter Federkrafteinwirkung aus einer Ausgangsposition in eine eine bestimmte Last anzeigende Position überführt wird, in der es bei Wegfall der angezeigten Last verbleibt.

Eine Lastkontrolleinrichtung der vorstehenden Art ist aus der DE-A-37 39 100 bekannt. Bei der bekannten Vorrichtung wird der Grundkörper von einem in einen Kettenstrang integrierten elliptischen Kettenglied gebildet, auf das ein ovales Kettenglied gesteckt ist, dessen lichte Weite bei nicht deformiertem elliptischen Kettenglied kleiner als die äußere Breite des letzteren ist. Verformt sich das elliptische Kettenglied, so nimmt seine äußere Breite ab, und das ovale Kettenglied wird bei Erreichen eines einer Überlastung des Kettenstranges entsprechenden Grenzwertes der äußeren Breite durch eine Feder über den Bauch des elliptischen Kettengliedes in eine die Überbelastung des Kettenstranges signalisierende Position gezogen.

Die bekannte Vorrichtung vermag insofern nicht voll zu befriedigen, als eine Längung des elliptischen Kettengliedes um einen bestimmten Betrag lediglich zu einer Veränderung der äußeren Breite dieses Kettengliedes um einen Bruchteil des Betrages der Längung führt. Es erfolgt mit anderen Worten eine Meßgrößenabschwächung mit der Maßgabe, daß toleranzbedingte Abweichungen der zusammengesteckten Kettenglieder der Anzeigegenauigkeit der bekannten Einrichtung enge Grenzen setzen. Hinzu kommt, daß beim praktischen Einsatz der bekannten Einrichtung nicht immer die Gewähr dafür gegeben ist, daß die Längsachsen der zusammengesteckten Glieder senkrecht zueinander stehen. Eine Schräglage dieser Achsen zueinander aber kann zu unerwünschten Klemmerscheinungen zwischen den zusammengesteckten Gliedern führen, die sich ebenfalls nachteilig auswirken. Schließlich eignet sich die bekannte Einrichtung nicht zur Anzeige von Zwischenwerten.

Der Erfindung liegt die Aufgabe zugrunde, eine robuste und kompakte Lastkontrolleinrichtung zu schaffen, bei der die Längung des Grundkörpers unmittelbar zur Lastanzeige genutzt wird, und die ungeachtet ihrer vergleichsweise hohen Anzeigegenauigkeit kostengünstig herstellbar ist. Diese Aufgabe wird bei einer gattungsgemäßen Lastkontrolleinrichtung erfindungsgemäß dadurch gelöst, daß das Anzeigeorgan von mindestens einem federnden oder unter Federkrafteinwirkung stehenden Schwenkhebel gebildet wird, dessen freiem Ende mindestens ein Rastanschlag zugeordnet ist, und daß der Rastanschlag den Schwenkhebel erst bei Erreichen eines vorgegebenen Deformationsgrades des Deformationsteiles des Grundkörpers freigibt.

Die erfindungsgemäße Einrichtung zeigt kritische Belastungen und die Überlastung eines Zugstranges sicher und deutlich an. Sie erlaubt eine Anzeige unterschiedlicher Belastungsgrade und bietet die Voraussetzung dafür, durch zusätzliche Maßnahmen eine Kalibrierung der Einrichtung zu erleichtern. In allen angezeigten Belastungsfällen wird eine selbsttätige Rückstellung der Belastungsanzeige verhindert.

Weitere Einzelheiten und Merkmale der Erfindung ergeben sich aus den Unteransprüchen und der nachstehenden Beschreibung mehrerer in der beigefügten Zeichnung dargestellter Ausführungsformen der Erfindung. Es zeigen:
Fig. 1 teilweise im Schnitt die Vorderansicht einer ersten Lastkontrolleinrichtung,
Fig. 2 einen Schnitt längs der Linie II-II in Fig. 1,
Fig. 3 die Vorderansicht einer geringfügig modifizierten zweiten Lastkontrolleinrichtung,
Fig. 4 einen Schnitt längs der Linie IV-IV in Fig. 3,
Fig. 5 eine als Wirbel ausgebildete Überlastkontrolleinrichtung,
Fig. 6 einen Schnitt längs der Linie VI-VI in Fig. 5,
Fig. 7 in vergrößertem Maßstab Kalibrierungsmöglichkeiten für Lastkontrolleinrichtungen gemäß den Fig. 1 bis 6 und
Fig. 8 eine Konstruktion, die eine einfache Rückstellung einer Belastungsanzeige ermöglicht.

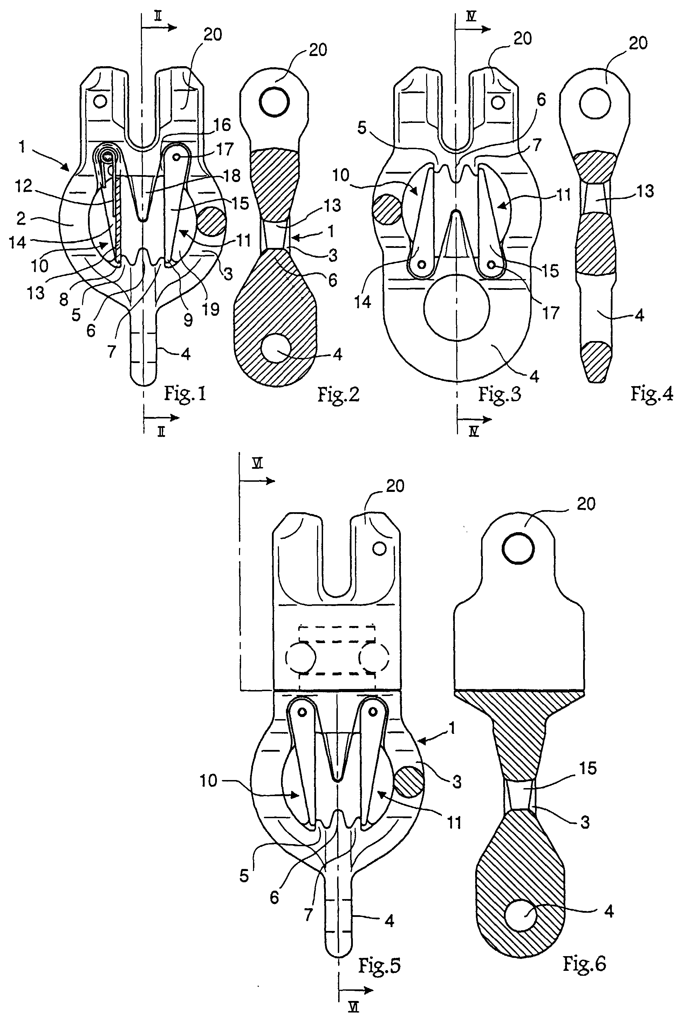

In den Figuren 1 und 2 ist 1 der Grundkörper einer ersten Lastkontrolleinrichtung, dessen Deformationsteil von zwei, einen zylindrischen Querschnitt aufweisenden kreisbogenförmigen Abschnitten 2 und 3 gebildet wird, die unter Last ihre Form dergestalt ändern, daß ihr Krümmungsradius mit steigender Belastung zunimmt. Im einer Öse 4 zugewandten Bereich des Grundkörpers 1 sind an dessen Innenseite Rastanschläge 5, 6 und 7 angeordnet, gegen die die freien Enden 8 und 9 zweier Schwenkhebel 10 und 11 durch eine sogenannte Scharnierfeder 12 gedrückt werden. Die Schwenkhebel 10 und 11 weisen jeweils zwei auf einem Teil ihrer Länge durch eine plattenförmige Brücke 13 miteinander verbundene Wangen 14 und 15 auf. Die über die Brücke 13 vorstehenden Enden der Wangen 14, 15 ragen in Taschen 16 an der den Rastanschlägen 5, 6, 7 gegenüberliegenden Seite des Grundkörpers 1 und sind hier auf einem Querstift 17 schwenkbar gelagert. Der Querstift 17 dient auch zur Halterung der Scharnierfeder 12. Zum zusätzlichen Schutz der im Innenraum des Grundkörpers 1 bereits weitgehend geschützt untergebrachten Schwenkhebel 10 und 11 dient eine Schutz- und Stütznase 18, die in den Ringraum 19 des Grundkörpers ragt.

Bei Verwendung der Lastkontrolleinrichtung im zulässigen Belastungsbereich nehmen die Schwenkhebel 10 und 11 die in Fig. 1 dargestellte Lage ein, d.h. ihre freien Enden 8 und 9 liegen gegen die Rastanschläge 5 bzw. 7 an. Sobald die Belastung eine aus Sicherheitsgründen vorgegebene Grenzlast überschreitet und es infolgedessen zu einer Vergrößerung des Abstandes zwischen den von der Öse 4 und einem Gabelkopf 20 gebildeten Anschlußstellen um einen bestimmten Betrag kommt, geben die Rastanschläge 5 und 7 die freien Enden 8 und 9 der Schwenkhebel 10 und 11 frei, und diese werden durch die Scharnier federn 12 gegen die sich gegenüberliegenden Flanken des Rastanschlages 6 gedrückt. Erst im Falle einer Überbelastung des jeweiligen Zugstranges, d.h. nach einer stärkeren Längung des Grundkörpers 1 klappen die Schwenkhebel 10 und 11 weiter zusammen, wobei sie zur Anlage gegen die Flanken der Schutz- und Stütznase 18 kommen. Dem Benutzer der Lastkontrolleinrichtung wird auf diese Weise unübersehbar signalisiert, daß er den überbelasteten Zugstrang ablegen muß.

Die Ausführungsform gemäß den Fig. 3 und 4 entspricht weitgehend der Ausführungsform gemäß Fig. 1 und 2. Verändert wurden lediglich die Lage der Schwenkhebel und die Form, Größe und Orientierung der Öse 4.

Im Falle der Ausführungsform gemäß den Fig. 5 und 6 formt der Grundkörper 1 einen Teil eines Wirbels, dessen zweiten Teil der Gabelkopf 20 bildet. Man erkennt, daß der Grundaufbau der beschriebenen Lastkontrolleinrichtung vielfache Variationen der Anschlußstellen zuläßt und insbesondere die Möglichkeit bietet, die Anschlußstellen im Rahmen sogenannter verwechslungsfreier Systeme als Lehren zu nutzen.

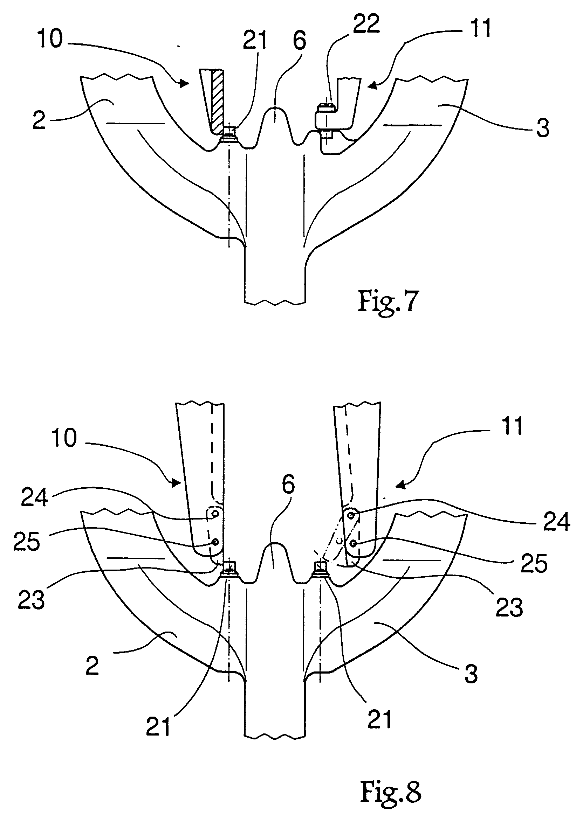

In Fig. 7 sind zwei Modifikationsmöglichkeiten für die in den Fig. 1 bis 6 gezeigten Lastkontrolleinrichtungen gezeigt. Im linken Teil ist ein mit dem freien Ende 8 des Schwenkhebels 10 zusammenwirkender austauschbarer Rastanschlag 21 dargestellt. Versieht man diesen Rastanschlag 21 mit einem Schraubzapfen, so ist durch eine Veränderung der Höhe des Rastanschlages 21 eine Kalibrierung der Einrichtung möglich. Eine Kalibrierung gestattet auch die im rechten Teil der Fig. 7 gezeigte Lösung, bei der das freie Ende 9 des Schwenkhebels 11 mit einem von einer Einstellschraube gebildeten Gegenanschlag 22 versehen ist.

Die beschriebenen Lastkontrolleinrichtungen sind sowohl statisch als auch dynamisch hoch belastbar. Sie ermöglichen ein schnelles, eindeutiges optisches Erkennen bestimmter Belastungen, wobei die jeweilige Lastanzeige erhalten bleibt. Durch die gewählte Anordnung der Schwenkhebel sind diese gegen Beschädigungen gesichert. Bei Verwendung mehrerer, mit den Schwenkhebeln zusammenwirkender Rastanschläge wird dem Benutzer rechtzeitig signalisiert, daß er sich in Grenzbereiche der Belastbarkeit begibt.

Um die Lastkontrolleinrichtung nach der Anzeige des Eintritts in einen der Überlastung vorgeschalteten Grenzbereich umgehend wieder einsetzen zu können, sind bei der in Fig. 8 dargestellten weiteren Modifikation an den freien Enden der Schwenkhebel 10 und 11 Einsätze 23 angeordnet, die um Achsen 24 kippen können, sofern sie nicht durch Sicherungsstifte 25 in ihrer Sollage arretiert sind. Die Sicherungsstifte 25 werden zum Zwecke der Rückführung der Schwenkhebel aus einer Position zwischen den Rastanschlägen 6 und 21 entfernt, um anschließend wieder umgesetzt zu werden.

## Patentansprüche

1. Mechanische Lastkontrolleinrichtung für insbesondere als Ketten ausgebildete Zugstränge mit einem Grundkörper, der einen bis zum Erreichen einer Grenzlast elastisch und nach Überschreiten der Grenzlast plastisch verformbaren Deformationsteil (2, 3) und zwei Anschlußstellen (4, 20) aufweist, deren Abstand voneinander sich unter Lasteinwirkung ändert, sowie mit einem Anzeigeorgan (10, 11), das im Falle einer Verformung des Deformationsteiles des Grundkörpers unter Federkrafteinwirkung aus einer Ausgangsposition in eine eine bestimmte Last anzeigende Position überführt wird, in der es bei Wegfall der angezeigten Last verbleibt, **dadurch gekennzeichnet**, daß das Anzeigeorgan von mindestens einem federnden oder unter Federkrafteinwirkung stehenden Schwenkhebel (10, 11) gebildet wird, dessen freiem Ende (8, 9) mindestens ein Rastanschlag (5 bzw. 7) zugeordnet ist, und daß der Rastanschlag (5 bzw. 7) den Schwenkhebel (10, 11) erst bei Erreichen eines vorgegebenen Deformationsgrades des Deformationsteiles (2, 3) des Grundkörpers (1) freigibt.

2. Lastkontrolleinrichtung nach Anspruch 1, **dadurch gekennzeichnet**, daß sie mit zwei in gegenläufige Richtungen bewegbaren Schwenkhebeln (10, 11) ausgerüstet ist.

3. Lastkontrolleinrichtung nach Anspruch 1 oder 2, **dadurch gekennzeichnet**, daß sie mehrere unterschiedlichen Deformationsgraden zugeordnete Rastanschläge (5, 6; 7, 6) aufweist.

4. Lastkontrolleinrichtung nach Anspruch 2 oder 3, **dadurch gekennzeichnet**, daß dem einen Schwenkhebel (10)anderen Deformationsgraden entsprechende Rastanschläge (5, 6) zugeordnet sind als dem anderen Schwenkhebel (11).

5. Lastkontrolleinrichtung nach einem oder mehreren der Ansprüche 1 bis 4, **dadurch gekennzeichnet**, daß der Grundkörper (1) im wesentlichen ringförmig ausgebildet ist.

6. Lastkontrolleinrichtung nach Anspruch 5, **dadurch gekennzeichnet**, daß der bzw. die Schwenkhebel (10, 11) im Innern des Deformationsteiles (2, 3) des Grundkörpers (1) angeordnet ist bzw. sind.

7. Lastkontrolleinrichtung nach einem oder mehreren der Ansprüche 1 bis 6, **dadurch gekennzeichnet**, daß mindestens ein Rastanschlag (21) lösbar mit dem Grundkörper (1) verbunden ist.

8. Lastkontrolleinrichtung nach Anspruch 7, **dadurch gekennzeichnet**, daß der lösbare Rastanschlag (21) austausch und/oder einstellbar ist.

9. Lastkontrolleinrichtung nach einem oder mehreren der Ansprüche 1 bis 8, **dadurch gekennzeichnet**, daß am freien Ende mindestens eines Schwenkhebels (11) ein mindestens einem Rastanschlag (6, 7) zugeordneter, lösbarer Gegenanschlag (22) angeordnet ist.

10. Lastkontrolleinrichtung nach Anspruch 9, **dadurch gekennzeichnet**, daß der lösbare Gegenanschlag (22) austausch- und/oder einstellbar ist.

11. Lastkontrolleinrichtung nach einem oder mehreren der Ansprüche 1 bis 10, **dadurch gekennzeichnet**, daß an den freien Enden (8,9) der Schwenkhebel (10,11) Einsätze (23) angeordnet sind, die aus einer Kontrollposition, in der sie mit einem Rastanschlag (5,7,21) zusammenwirken, in eine Rückstellposition überführbar sind, in der sie den Rastanschlag (5,7,21) passieren können.

12. Lastkontrolleinrichtung nach Anspruch 11, **dadurch gekennzeichnet**, daß die Einsätze (23) durch Sicherungsstifte (25) in ihrer Kontrollposition arretierbar sind.

13. Lastkontrolleinrichtung nach Anspruch 11 oder 12, **dadurch gekennzeichnet**, daß die Einsätze (23) schwenkbar um Achsen (24) an den Schwenkhebeln (10,11) gelagert sind.

14. Lastkontrolleinrichtung nach einem oder mehreren der Ansprüche 1 bis 13, **dadurch gekennzeichnet**, daß mindestens eine Anschlußstelle des Grundkörpers (1) von einem Gabelkopf (20) gebildet wird.

15. Lastkontrolleinrichtung nach einem oder mehreren der Ansprüche 1 bis 14, **dadurch gekennzeichnet**, daß der Grundkörper (1) einen Teil eines Wirbels bildet.

16. Lastkontrolleinrichtung nach einem oder mehreren der Ansprüche 1 bis 15, **dadurch gekennzeichnet**, daß jeder Schwenkhebel (10, 11) zwei auf einem Teil ihrer Länge über eine plattenförmige Brücke (13) miteinander verbundene Wangen (14, 15) aufweist, deren über die Brücke (13) vorstehende Enden mittels eines Querstiftes (17) mit dem Grundkörper (1) verbunden sind.

17. Lastkontrolleinrichtung nach Anspruch 16, **dadurch gekennzeichnet**, daß die über die Brücke (13) vorstehenden Enden der Wangen (14, 15) der Schwenkhebel (10, 11) in Taschen (16) des Grundkörpers (1) angeordnet sind.

18. Lastkontrolleinrichtung nach Anspruch 16 oder 17, **dadurch gekennzeichnet**, daß der Querstift (17) ein Lager für eine schraubenförmig gewundene Scharnierfeder (12) bildet.

19. Lastkontrolleinrichtung nach einem oder mehreren der Ansprüche 5 bis 18, **dadurch gekennzeichnet**, daß in den Innenraum des Deformationsteiles (2, 3) des Grundkörpers (1) eine Schutz- und Stütznase (18) für den bzw. die Schwenkhebel (10, 11) ragt.

## Claims

1. A mechanical load monitoring device for tension lines designed especially as chains, with a basic body which has a deformation part (2,3), deformable elastically until a limit load is reached and plastically after the limit load is exceeded, and two connection points (4,20), the mutual spacing of which changes under a load effect, and with an indicator member (10,11) which, in the event of a deformation of the deformation part of the basic body, is transferred under the effect of spring force out of an initial position into a predetermined load indicating position, in which it remains during the cessation of the predetermined load, wherein the indicator member is formed by at least one pivoting lever (10,11) which is resilient or is under the effect of spring force and to the free end (8,9) of which is assigned at least one detent stop (5 or 7), respectively, and wherein the detent stop (5 or 7) releases the pivoting lever (10,11) only when a predetermined degree of deformation of the deformation part (2,3) of the basic body (1) is reached.

2. The load monitoring device as claimed in claim 1, wherein it is equipped with two pivoting levers (10,11) movable in opposite directions.

3. The load monitoring device as claimed in claim 1 or 2, wherein it has a plurality of detent stops (5,6; 7,6) assigned to different degrees of deformation.

4. The load monitoring device as claimed in claim 2 or 3, wherein to one pivoting lever (10) are assigned detent stops (5,6) corresponding to degrees of deformation while to the other pivoting lever (11) are assigned detent stops (5,6) corresponding to further degrees of deformation which are different from the first degrees.

5. The load monitoring device as claimed in one or more of claims 1 to 4, wherein the basic body (1) is of essentially annular design.

6. The load monitoring device as claimed in claim 5, wherein the pivoting lever or pivoting levers (10,11) is or are arranged inside the deformation part (2,3) of the basic body (1).

7. The load monitoring device as claimed in one or more of claims 1 to 6, wherein at least one detent stop (21) is connected releasably to the basic body (1).

8. The load monitoring device as claimed in claim 7, wherein the releasable detent stop (21) is exchangeable and/or adjustable.

9. The load monitoring device as claimed in one or more of claims 1 to 8, wherein a releasable counterstop (22) assigned to at least one detent stop (6,7) is arranged at the free end of at least one pivoting lever (11).

10. The load monitoring device as claimed in claim 9, wherein the releasable counterstop (22) is exchangeable and/or adjustable.

11. The load monitoring device as claimed in one or more of claims 1 to 10, wherein there are arranged at the free ends (8,9) of the pivoting levers (10,11) inserts (23) which can be transferred out of a monitoring position, in which they cooperate with a detent stop (5,7,21), into a return position, in which they can pass the detent stop (5,7,21).

12. The load monitoring device as claimed in claim 11, wherein the inserts (23) can be retained in their monitoring position by retaining pins (25).

13. The load monitoring device as claimed in claim 11 or 12, wherein the inserts (23) are mounted pivotably about pins (24) on the pivoting levers (10,11).

14. The load monitoring device as claimed in one or more of claims 1 to 13, wherein at least one connection point of the basic body (1) is formed by a fork head (20).

15. The load monitoring device as claimed in one or more of claims 1 to 14, wherein the basic body (1) forms part of a swivel.

16. The load monitoring device as claimed in one or more of claims 1 to 15, wherein each pivoting lever (10,11) has two cheeks (14,15) which are connected to one another on part of their length via a plate-like bridge (13) and of which the ends protruding beyond the bridge (13) are connected to the basic body (1) by means of a crosspin (17).

17. The load monitoring device as claimed in claim 16, wherein those ends of the cheeks (14,15) of the pivoting levers (10,11) which protrude beyond the bridge (13) are arranged in pockets (16) of the basic body (1).

18. The load monitoring device as claimed in claim 16 or 17, wherein the crosspin (17) forms a bearing for a helically coiled hinge spring (12).

19. The load monitoring device as claimed in one or more of claims 5 to 18, wherein a protective and supportive nose (18) for the pivoting lever or pivoting levers (10,11) projects into the interior of the deformation part (2,3) of the basic body (1).

## Revendications

1. Dispositif mécanique de contrôle de charge pour des lignes de traction réalisées notamment sous forme de chaînes, comprenant un corps de base qui comporte une partie déformable (2, 3), pouvant être déformée élastiquement jusqu'à l'atteinte d'une charge limite et plastiquement une fois la charge limite dépassée, et deux points de raccordement (4, 20) dont la distance mutuelle se modifie sous l'action d'une charge, et comprenant un organe d'affichage (10, 11) qui, en cas de déformation de la partie déformable du corps de base, est transféré sous l'action d'une force de ressort d'une position initiale dans une position affichant une charge donnée, position dans laquelle il reste lorsque la charge affichée est supprimée, **caractérisé** en ce que l'organe d'affichage est formé par au moins un levier pivotant (10, 11) à ressort ou se trouvant sous l'action d'une force de ressort, levier à l'extrémité libre (8, 9) duquel est associée au moins une butée de crantage (5 ou 7), et en ce que la butée de crantage (5 ou 7) ne libère le levier pivotant (10, 11) qu'à l'atteinte d'un degré prédéfini de déformation de la partie déformable (2, 3) du corps de base (1).

2. Dispositif de contrôle de charge selon la revendication 1, **caractérisé** en ce qu'il est équipé de deux leviers pivotants (10, 11) mobiles en directions opposées.

3. Dispositif de contrôle de charge selon la revendication 1 ou 2, **caractérisé** en ce qu'il comporte plusieurs butées de crantage (5, 6 ; 7, 6) associées à des degrés de déformation différents.

4. Dispositif de contrôle de charge selon la revendication 2 ou 3, **caractérisé** en ce que les butées de crantage (5, 6) associées à l'un (10) des leviers pivotants correspondent à d'autres degrés de déformation que celles associées à l'autre levier pivotant (11).

5. Dispositif de contrôle de charge selon une ou plusieurs des revendications 1 à 4, **caractérisé** en ce que le corps de base (1) est réalisé de forme essentiellement annulaire.

6. Dispositif de contrôle de charge selon la revendication 5, **caractérisé** en ce que le ou les leviers pivotants (10, 11) sont disposés à l'intérieur de la partie déformable (2, 3) du corps de base (1).

7. Dispositif de contrôle de charge selon une ou plusieurs des revendications 1 à 6, **caractérisé** en ce qu'au moins une butée de crantage (21) est assemblée de façon amovible au corps de base (1).

8. Dispositif de contrôle de charge selon la revendication 7, **caractérisé** en ce que la butée de crantage (21) amovible peut être remplacée et/ou réglée.

9. Dispositif de contrôle de charge selon une ou plusieurs des revendications 1 à 8, **caractérisé** en ce qu'une contre-butée amovible (22), associée à au moins une butée de crantage (6, 7), est disposée à l'extrémité libre d'au moins un levier pivotant (11).

10. Dispositif de contrôle de charge selon la revendication 9, **caractérisé** en ce que la contre-butée amovible (22) peut être remplacée et/ou réglée.

11. Dispositif de contrôle de charge selon une ou plusieurs des revendications 1 à 10, **caractérisé** en ce que des éléments rapportés (23) sont disposés aux extrémités libres (8, 9) des leviers pivotants (10, 11), éléments qui peuvent être transférés d'une position de contrôle, dans laquelle ils coopèrent avec une butée de crantage (5, 7, 21), dans une position de remise à zéro dans laquelle ils peuvent passer la butée de crantage (5, 7, 21).

12. Dispositif de contrôle de charge selon la revendication 11, **caractérisé** en ce que les éléments rapportés (23) peuvent être bloqués dans leur position de contrôle par des axes de blocage (25).

13. Dispositif de contrôle de charge selon la revendication 11 ou 12, **caractérisé** en ce que les éléments rapportés (23) sont montés à pivotement autour d'axes (24) sur les leviers pivotants (10, 11).

14. Dispositif de contrôle de charge selon une ou plusieurs des revendications 1 à 13, **caractérisé** en ce qu'au moins un point de raccordement du corps de base (1 ) est formé par une tête de fourche (20).

15. Dispositif de contrôle de charge selon une ou plusieurs des revendications 1 à 14, **caractérisé** en ce que le corps de base (1) fait partie d'un élément vertébral.

16. Dispositif de contrôle de charge selon une ou plusieurs des revendications 1 à 15, **caractérisé** en ce que chaque levier pivotant (10, 11) comporte deux joues (14, 15) mutuellement reliées sur une partie de leur longueur par un pont (13) en forme de plaque, joues dont les extrémités dépassant du pont (13) sont reliées au corps de base (1) au moyen d'un goujon transversal (17).

17. Dispositif de contrôle de charge selon la revendication 16, **caractérisé** en ce que les extrémités des joues (14, 15) des leviers pivotants (10, 11) qui dépassent du pont (13) sont disposées dans des poches (16) du corps de base (1).

18. Dispositif de contrôle de charge selon la revendication 16 ou 17, **caractérisé** en ce que le goujon transversal (17) constitue un palier pour un ressort à charnière (12) enroulé en hélice.

19. Dispositif de contrôle de charge selon une ou plusieurs des revendications 5 à 18, **caractérisé** en ce qu'un ergot de protection et de soutien (18) pour le ou les leviers pivotants (10, 11) fait saillie dans l'espace intérieur de la partie déformable (2, 3) du corps de base (1).
